# EUROPÄISCHE PATENTANMELDUNG

(11) **EP 4 712 105 A1**
(43) Veröffentlichungstag der Anmeldung: **18.03.2026**
(21) Anmeldenummer: 25201282.8
(22) Anmeldetag: 10.09.2025
(51) Int. Cl.: H01B 3/44, H01B 7/18, H01B 9/02

(54) **NIEDERSPANNUNGS- ODER MITTELSPANNUNGSKABEL**

(30) Priorität: 11.09.2024 CH 994202024
(71) Anmelder: Studer Cables AG, 4658 Däniken (CH)
(72) Erfinder: WEHRLI, Urs, 5034 Suhr (CH); SOMMERHALDER, Stefan, 5102 Rupperswil (CH)
(74) Vertreter: Schaad, Balass, Menzl & Partner AG

(57) **Zusammenfassung**

Die vorliegende Erfindung betrifft ein Niederspannungs- oder Mittelspannungskabel für den Aussenbereich. Es umfasst einen Kabelkern und einen diesen radial umgebenden Aussenmantel, wobei der Kabelkern wenigstens einen Leiter, ein diesen umgebendes Isolationssystem und gegebenenfalls eine das Isolationssystem umgebende metallische Abschirmung enthält. Der Aussenmantel weist wenigstens eine erste Schicht und eine zweite Schicht auf, wobei die zweite Schicht in einem grösseren radialen Abstand zum Kabelkern angeordnet ist als die erste Schicht, wobei die erste Schicht des Aussenmantels ein erstes Polymerbasismaterial ausgewählt aus der Gruppe bestehend aus PE-LLD (lineares niedrigdichtes Polyethylen) und PE -LD (niederdichtes Polyethylen) oder einer Mischung davon und wenigstens 15 Gew.% eines Füllstoffs mit einer Dichte von 2.5 bis 3.0 g/cm³ enthält und die zweite Schicht des Aussenmantels ein zweites Polymerbasismaterial enthaltend wenigstens 90 Gew.% PE-HD (hochdichtes Polyethylen) enthält, wobei diese zweite Schicht eine Dicke von 20% bis 50% der gesamten Dicke des Aussenmantels aufweist.

## Beschreibung

Die vorliegende Erfindung betrifft ein Niederspannungs- oder Mittelspannungskabel.

Mittelspannungskabel (1 bis 36 kV) spielen eine entscheidende Rolle in der Energieversorgung und sind essenziell für die zuverlässige Übertragung elektrischer Energie in Versorgungsnetzen. Insbesondere im Aussenbereich müssen diese Kabel hohen Anforderungen gerecht werden, um einen sicheren und effizienten Betrieb zu gewährleisten. Die Bedingungen im Freien, wie Witterungseinflüsse, mechanische Belastungen und UV-Strahlung, stellen hohe Ansprüche an die Materialien und die Konstruktion der Kabel. Um eine langanhaltende Funktionalität und Sicherheit zu gewährleisten, müssen Mittelspannungskabel spezifische technische und qualitative Anforderungen erfüllen. Diese umfassen neben der elektrischen Leistungsfähigkeit auch Aspekte der Isolierung, der mechanischen Festigkeit und der Widerstandsfähigkeit gegenüber Umwelteinflüssen. Nur durch die Einhaltung dieser Anforderungen können die Kabel ihre Aufgaben in der Energieverteilung zuverlässig und effizient erfüllen.

Insbesondere muss der Aussenmantel für Mittelspannungskabel in erster Linie einen hervorragenden mechanischen Schutz bieten und ein günstiges Gleitverhalten beim Verlegen ermöglichen. Ein Material, das diese Anforderungen sehr gut erfüllt, ist PE-HD. Allerdings bringt PE-HD den Nachteil mit sich, dass das Kabel dadurch steif und schwer abmantelbar wird, was die Montagefreundlichkeit erheblich beeinträchtigt. Alternativ kann der Kabelmantel auch aus einer Schicht von MDPE, PE-MD oder PE-LLD bestehen. Diese Materialien bieten aber sowohl einen geringeren mechanischen Schutz als auch ein schlechteres Gleitverhalten im Vergleich zu PE-HD.

Niederspannungskabel (bis 1 kV) sind wesentliche Bestandteile der Energieverteilung für Haushalte und Industrieanlagen. Sie müssen widerstandsfähig und sicher sein, um elektrische Energie effizient und zuverlässig an ihre Zielorte zu übertragen.

CH689241A5 beschreibt Elektrokabel für Mittelspannungen, mit einer Ader, die aus einem Stromleiter und einem an seiner inneren und äusseren Randzone je eine Halbleiterschicht aufweisenden Isolationsmantel besteht und von einer einen Null-Leiter enthaltenen Hülle umgeben ist.

EP3474293B1 offenbart ein Kabel, das mindestens ein längliches leitfähiges Element und mindestens eine elektrisch isolierende Kompositschicht umfasst, welche das längliche leitfähige Element umgibt. Dabei enthält die elektrisch isolierende Kompositschicht ein organisches Polymermaterial mit offenen und/oder halboffenen Zellen sowie ein Zementmaterial, das mindestens einen Teil dieser offenen und/oder halboffenen Zellen füllt.

WO 2011/149463 offenbart ein elektrisches Stromkabel, das eine äussere halbleitfähige Schicht aufweist, die um eine äusserste Schicht einer Kabelummantelung extrudiert und mit ihr in Kontakt ist. Die Ummantelung kann aus mehreren polymeren Schichten bestehen. Die halbleitfähige Schicht unterscheidet sich von der unmittelbar darunterliegenden äussersten Ummantelungsschicht mindestens durch die Farbe.

WO 2007/011350 offenbart ein elektrisches Stromkabel mit einem Kern und einer Ummantelung, die das Äussere des Kabels bildet. Die Ummantelung besteht aus zwei Schichten. Mindestens die erste Schicht besteht aus einem expandierten polymeren Material, dessen Dichte durch Zugabe eines Treibmittels während der Extrusion reduziert wird. Die zweite Schicht, die ebenfalls expandiert sein kann, wird um die erste Schicht extrudiert.

EP 4 015 208 beschreibt eine laminierte Wasserbarriere mit Metallfolie und thermoplastischen Polymerlagen, die kapazitive Ströme radial ableitet und so Kabeldurchschläge verhindert.

US 2023/083864 beschreibt ein metallisches Kabel mit einer Aussenummantelung aus Polyethylen, die bei der Extrusion die Harz- und Metallschicht des Laminatbands fest verbindet und so den Kabelkern sicher umschliesst.

WO 2019/013976 beschreibt Kabelschutzummantelungen mit einer äusseren Schicht ohne Schädlingsabwehrmittel, einer inneren Schicht mit Schädlingsabwehrmittel sowie optional einer Haftvermittlerschicht zwischen Aussen- und Innenschicht. Die objektive technische Aufgabe besteht darin, ein Niederspannungs- oder Mittelspannungskabel bereitzustellen, das sowohl guten mechanischen Schutz, hohe Flexibilität und ein günstiges Gleitverhalten kombiniert, dabei aber dennoch leicht abmantelbar ist.

Die Aufgabe wird gelöst durch ein Niederspannungs- oder Mittelspannungskabel gemäss Anspruch 1. Weitere bevorzugte Ausführungsformen sind Gegenstand der abhängigen Ansprüche.

Das erfindungsgemässe Niederspannungs- oder Mittelspannungskabel für den Aussenbereich umfasst einen Kabelkern und einen diesen radial umgebenden Aussenmantel, wobei der Kabelkern wenigstens einen Leiter, ein diesen umgebendes Isolationssystem und gegebenenfalls eine das Isolationssystem umgebende metallische Abschirmung enthält. Der Aussenmantel weist wenigstens eine erste Schicht und eine zweite Schicht auf, wobei die zweite Schicht in einem grösseren radialen Abstand zum Kabelkern angeordnet ist als die erste Schicht. Die erste Schicht des Aussenmantels enthält ein erstes Polymerbasismaterial ausgewählt aus der Gruppe bestehend aus PE-LLD (lineares niedrigdichtes Polyethylen), PE-MD (mitteldichtes Polyethylen) und PE-LD (niederdichtes Polyethylen) oder einer Mischung davon und wenigstens 15 Gew.% eines Füllstoffs mit einer Dichte von 2.3 bis 3.0 g/cm³, vorzugsweise 2.5 bis 3.0 g/cm³, und die zweite Schicht des Aussenmantels enthält ein zweites Polymerbasismaterial enthaltend wenigstens 90 Gew.% PE-HD (hochdichtes Polyethylen), wobei diese zweite Schicht eine Dicke von 20% bis 50% der gesamten Dicke des Aussenmantels aufweist.

Die zweite Schicht des Aussenmantels, die in einem grösseren radialen Abstand zum Kabelkern angeordnet ist als die erste Schicht und vorzugsweise die äusserste Schicht des Aussenmantels darstellt, enthält ein zweites Polymerbasismaterial, das zu mindestens 90 Gewichtsprozent PE-HD (hochdichtes Polyethylen) enthält. PE-HD weist, gemessen nach ISO 527, ein hohes E-Modul von ca. 900 bis 1200 MPa und, gemessen nach ISO 868, eine hohe Shore-Härte von ca. 60 bis 70 D auf, was zu einer hohen Resistenz gegen mechanische Beanspruchung führt und einen geringen Reibungskoeffizienten besitzt, was geringere Einzugskräfte beim Kabeleinzug ergibt. Das, heisst, diese zweite Schicht bietet zusätzlichen mechanischen Schutz und ist widerstandsfähig gegenüber Umwelteinflüssen.

Die Dicke der zweiten Schicht des erfindungsgemässen Niederspannungs- oder Mittelspannungskabels beträgt zwischen 20% und 50% der gesamten Dicke des Aussenmantels. Diese Konstruktion sorgt für ein ideales Verhältnis von Sicherheit und Flexibilität, erhöht die Lebensdauer des Kabels und erleichtert die Installation in komplexen Umgebungen.

Durch dieses zweite Polymerbasismaterial ist ein guter mechanischer Schutz sowie ein günstiges Gleitverhalten gewährleistet. Dieser mechanische Schutz ist entscheidend, um physische Schäden an Niederspannungs- oder Mittelspannungskabeln zu vermeiden, da diese oft in anspruchsvollen Umgebungen verlegt werden. Externe Einflüsse wie scharfe Kanten, mechanische Belastungen und Steine können die Kabel ohne entsprechende Schutzmassnahmen schwer beschädigen. Ein weiterer wesentlicher Vorteil dieser Schutzschicht ist die Erhöhung der Langlebigkeit und Zuverlässigkeit des Kabels. Mechanische Beschädigungen können die Isolierung beeinträchtigen und zu Kurzschlüssen oder elektrischen Ausfällen führen. Der erfindungsgemässe Aussenmantel bewahrt die Funktionstüchtigkeit des Kabels und minimiert die Notwendigkeit teurer und zeitaufwändiger Reparaturen oder eines kompletten Austauschs. Zusätzlich schützt diese zweite Schicht das erfindungsgemässe Niederspannungs- oder Mittelspannungskabel vor diversen Umwelteinflüssen wie Feuchtigkeit, Chemikalien und extremen Temperaturen. Durch den Einsatz von hochdichtem Polyethylen (PE-HD) als Hauptbestandteil dieser zweiten Schicht wird gewährleistet, dass die Kabel nicht nur mechanischen Belastungen, sondern auch widrigen Umgebungsbedingungen standhalten können.

Die erste Schicht des Aussenmantels enthält ein erstes Polymerbasismaterial, das aus der Gruppe bestehend aus PE-LLD (lineares niedrigdichtes Polyethylen), MDPE (mitteldichtes Polyethylen) und PE-LD (niederdichtes Polyethylen) oder einer Mischung davon ausgewählt wird. Die Polymere des ersten Polymerbasismaterials zeichnen sich durch ein niedriges E-Modul aus (vorzugsweise im Bereich von 200 bis 700 MPa, besonders bevorzugt im Bereich von 300 bis 500 MPa gemessen gemäss ISO 527), was für die gewünschte Flexibilität sorgt. Darüber hinaus zeichnet sich das Material durch eine hohe Schmelzflussrate (Melt Flow Index, kurz MFI) aus, bevorzugt im Bereich von 0.1 bis 0.9 g/10min, besonders bevorzugt 0.2 bis 0.5 g/10min (gemessen nach ISO 1133 bei (190°C / 2.16kg)), was ein Eindringen des Polymers in einen möglicherweise vorhandenen Drahtschirm minimiert oder verhindert und somit die Flexibilität optimal unterstützt. Zusätzlich enthält die Schicht wenigstens 15 Gew.% eines Füllstoffs mit einer Dichte von 2,3 bis 3,0 g/cm³, vorzugsweise 2,5 bis 3,0 g/cm³, was in der ersten Schicht die Weiterreissfestigkeit reduziert und das Brechverhalten verbessert. Gegebenenfalls wird dieser Füllstoff in Form eines Masterbatches eingearbeitet. Durch diese Zusammensetzung der ersten Schicht des Aussenmantels wird die Installation und Handhabung signifikant vereinfacht. Dies ist besonders vorteilhaft, da die Installationszeit und die Kosten reduziert werden können.

Überdies wurde überraschenderweise festgestellt, dass durch den wenigstens zweischichtigen Aufbau des Aussenmantels das erfindungsgemässe Kabel einfacher entmantelt werden kann, wobei das Risiko der Beschädigung des Kabelinneren wesentlich reduziert wird. Das erfindungsgemässe Kabel hat ein deutlich besseres Brechverhalten bei abgestimmter Schnitttiefe durch den Aussenmantel, ohne dabei die von den Normen geforderten mechanischen Anforderungen zu verletzen.

Erfindungswesentlich ist der wenigstens zweischichtige Aufbau des Aussenmantels - das heisst, die beiden Polymerbasismaterialien werden nicht als Mischung (Blend) verarbeitet, sondern vorzugsweise coextrudiert oder im Tandem-Verfahren aufgebracht. Bei der Coextrusion werden die zwei oder mehr verschiedenen Polymerbasismaterialien gleichzeitig durch einen Mehrschicht-Ummantelungskopf extrudiert, wodurch eine einheitliche mehrschichtige Struktur entsteht. Im Tandem-Verfahren werden hingegen zwei oder mehr Extrusionssysteme hintereinander eingesetzt. Ein erster Extruder mit Ummantelungskopf erzeugt eine erste Schicht, die zweite Schicht wird mit einem zweiten Extruder mit Ummantelungskopf hinzugefügt. Nur durch die mindestens zwei Schichten kann die Handhabung und insbesondere die Abmantelung vereinfacht werden.

Innerhalb der vorliegenden Erfindung wird der Ausdruck PE-HD (hochdichtes Polyethylen) verwendet, wie er in der Norm ISO 1043-1 definiert ist. PE-HD ist ein thermoplastischer Kunststoff, der sich durch eine Dichte von typischerweise 0,941 bis 0,965 g/cm³ auszeichnet.

Innerhalb der vorliegenden Erfindung wird der Ausdruck PE-LLD (lineares niedrigdichtes Polyethylen) verwendet, wie er in der Norm ISO 1043-1 definiert ist. PE-LLD zeichnet sich durch seine lineare Struktur mit kurzen Seitenästen aus und hat eine Dichte von 0,915 bis 0,935 g/cm³.

Innerhalb der vorliegenden Erfindung wird der Ausdruck PE-LD (niederdichtes Polyethylen) verwendet, wie er in der Norm ISO 1043-1 definiert ist. PE-LD ist ein thermoplastischer Kunststoff mit einer verzweigten Struktur und hat eine Dichte von 0,910 bis 0,925 g/cm³.

Vorzugsweise besteht das erste Polymerbasismaterial des erfindungsgemässen Niederspannungs- oder Mittelspannungskabels zu mindestens 50% aus PE-LLD oder ist vollständig aus PE-LLD gefertigt. Dies erhöht die Flexibilität des erfindungsgemässen Kabels weiter und erleichtert das Abmanteln, wobei die mechanischen Schutzfunktionen weiterhin gewährleistet werden.

Die erste Schicht des Aussenmantels kann 15 bis 50 Gew.% des Füllmaterials, 40 bis 85 Gew.% des Polymerbasismaterials und 0 bis 10% weitere Inhaltsstoffe enthalten. Mögliche weitere Inhaltsstoffe sind Stabilisatoren, die helfen, die Materialeigenschaften über einen längeren Zeitraum zu bewahren; Antioxidationsmittel, die Oxidationsprozesse verhindern und somit die Lebensdauer des Materials verlängern; UV-Absorber, die das Material vor schädlicher ultravioletter Strahlung schützen; und Verarbeitungsadditive, die die Herstellungsprozesse erleichtern und die Verarbeitungsqualität verbessern.

Gute Niederspannungs- oder Mittelspannungskabel konnten erhalten werden, wenn der Füllstoff aus der Gruppe bestehend aus Kreide, Talk, Aluminiumtrihydroxid, Magnesiumhydroxid und Kaolin oder Mischungen davon ausgewählt wurde. Ein besonders bevorzugter Füllstoff ist Kreide (Calciumcarbonat), da sie mehrere Vorteile bietet. Erstens verbessert sie dank ihrer spezifischen Eigenschaften die Abmantelbarkeit, da der mit Kreide gefüllte Mantel sich leichter brechen lässt, wenn er axial in geeigneter Tiefe eingeschnitten wird. Aufgrund der reduzierten Weiterreissfestigkeit kann der Mantel entsprechend einfacher entfernt werden, sodass das Risiko vermindert wird, die inneren Leiter des Kabels zu beschädigen. Zweitens hat die Zugabe von Kreide den Vorteil eines geringeren spezifischen Gewichts im Vergleich zu anderen möglichen Füllstoffen, was das Gesamtgewicht des Kabels reduziert und somit den Transport und die Verlegung erleichtert. Drittens kann die Verwendung von Kreide in der Mischung die Weiterreissfestigkeit des Kabelmantels reduzieren, was die Handhabung und Installation des Kabels weiter verbessert. Schliesslich wirkt Kreide als kosteneffizienter Füllstoff, der die Produktionskosten senken kann, ohne die Leistung des Kabels zu beeinträchtigen. All diese Eigenschaften machen Kreide zu einem idealen Füllstoff für die erste Schicht des Aussenmantels bei Niederspannungs- oder Mittelspannungskabeln.

Kreide hat typischerweise eine Dichte von etwa 2.5 bis 3.0 g/cm³. Diese kann mit einem Pyknometer bei 25°C gemessen werden. Die Partikelgrösse der verwendeten Kreide kann stark variieren und reicht von grobem Pulver bis hin zu extrem feinen Mikropartikeln, die weniger als 1 Mikrometer gross sind.

Vorzugsweise weist das erfindungsgemässe Niederspannungs- oder Mittelspannungskabel eine erste Schicht des Aussenmantels auf, die 30 bis 45 Gew.% Kreide enthält. Diese spezifische Menge an Kreide verbessert die Abmantelung.

Das Niederspannungs- oder Mittelspannungskabel ist vorzugsweise so gestaltet, dass das zweite Polymerbasismaterial aus PE-HD besteht. PE-HD bietet herausragende mechanische Eigenschaften und ein günstiges Gleitverhalten, was die Verlegung des Kabels erleichtert und gleichzeitig einen ausgezeichneten Schutz gegen mechanische Beanspruchungen gewährleistet. Die Verwendung von PE-HD als zweite Schicht trägt somit massgeblich zur Langlebigkeit und Funktionalität des Kabels bei.

Das erfindungsgemässe Kabel kann über eine metallische Abschirmung verfügen. Während Niederspannungskabel meist ohne metallische Abschirmung auskommen, ist sie bei Mittelspannungskabeln in der Regel vorhanden, um elektromagnetische Störungen zu verhindern und Fehlerströme sicher abzuleiten.

Das Niederspannungs- oder Mittelspannungskabel kann über eine metallische Abschirmung verfügen, die Aluminium enthält. Aluminium wird aufgrund seiner hervorragenden elektrischen Leitfähigkeit und seines vergleichsweise geringen Gewichts gewählt. Diese Eigenschaften tragen zur effizienten Abschirmung elektromagnetischer Interferenzen bei und erleichtern gleichzeitig die Handhabung und Installation des Kabels. Darüber hinaus bietet Aluminium mit einer vorzugsweise geschlossenen rohrförmigen Anordnung einen guten Korrosionsschutz und eine Diffusionssperre gegen Feuchtigkeit, was die Lebensdauer des Kabels verlängert.

Alternativ kann das Niederspannungs- oder Mittelspannungskabel so ausgestaltet sein, dass die metallische Abschirmung Kupfer enthält. Kupfer wird aufgrund seiner hervorragenden elektrischen Leitfähigkeit und seines hohen dämpfenden Effekts gegenüber elektromagnetischen Interferenzen verwendet. Diese Eigenschaften sorgen für eine hervorragende Leistungsfähigkeit und erhöhen die Zuverlässigkeit des Kabels. Darüber hinaus zeichnet sich Kupfer durch eine hohe mechanische Festigkeit und eine gute Formbarkeit aus, was die Installation erleichtert und die strukturelle Integrität des Kabels über seine Lebensdauer hinweg gewährleistet.

Die zweite Schicht des Aussenmantels des erfindungsgemässen Kabels, die vorzugsweise die äusserste Schicht des Aussenmantels darstellt, kann Additive als UV-Schutz enthalten. Diese Additive schützen das Kabel vor den schädlichen Auswirkungen der UV-Strahlung, wodurch die Alterungsbeständigkeit und die Lebensdauer des Kabels erheblich verbessert werden. Der UV-Schutz sorgt dafür, dass das Material nicht spröde wird und reisst, selbst wenn es über längere Zeit direkter Sonneneinstrahlung ausgesetzt ist. Dies macht das Kabel besonders geeignet für Anwendungen im Freien und in herausfordernden Umgebungen. Beispiel dafür sind UV-Absorber oder HALS (Hindered Amine Light Stabilizers) . Da diese Additive als UV-Schutz nur in die zweite Schicht eingebracht werden müssen, führt dies zu niedrigeren Herstellungskosten.

Aufgrund seiner hohen Widerstandsfähigkeit wird das erfindungsgemässe Niederspannungs- oder Mittelspannungskabel vorzugsweise im Aussenbereich eingesetzt.

Bevorzugt ist das erfindungsgemässe Kabel ein Mittelspannungskabel, da es die hohen mechanischen Anforderungen hervorragend erfüllt. Die Erfindung wird durch die folgenden Figuren weiter illustriert.
Fig. 1 zeigt einen Kabelaufbau eines erfindungsgemässen Kabels;
Fig. 2 zeigt die Reissdehnung in Bezug auf den Kreideanteil;
Fig. 3 zeigt die Zugfestigkeit in Bezug auf den Kreideanteil;
Fig. 4 zeigt den Weiterreisswiderstand in Abhängigkeit vom Volumenanteil der enthaltenen Kreide.
Fig. 5A und 5B zeigen das gezielte Bruchverhalten des erfindungsgemässen Kabels.
Fig. 6 zeigt die Wasseraufnahme in Abhängigkeit vom Massenanteil der enthaltenen Kreide.

### Figurenbeschreibung

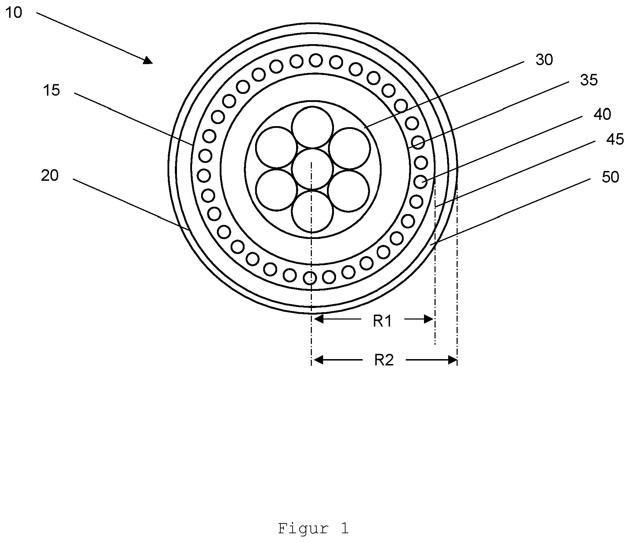

In Figur 1 wird eine bevorzugte Ausführungsform der vorliegenden Erfindung beschrieben. Es wird ein Mittelspannungskabel 10 im Querschnitt gezeigt. Das Mittelspannungskabel umfasst einen Kabelkern 15 mit dem Radius R1 und einen diesen radial umgebenden Aussenmantel 20 mit dem Radius R2. Der Kabelkern 15 umfasst wenigstens einen Leiter 30, einen diesen umgebendes Isolationssystem 35 und gegebenenfalls eine das Isolationssystem umgebende metallische Abschirmung 40. Der Ausdruck "wenigstens einen Leiter" bedeutet, dass das Kabel mindestens einen Leiter 30 enthält, es aber auch mehrere Leiter haben kann. Der Leiter besteht aus Kupfer, Aluminium und dient zur Leitung des elektrischen Stroms oder zur Übermittlung von Signalen. Je nach Anforderung kann der Leiter als Massivleiter, Leiterseil oder als Litzenleiter ausgeführt sein, um die Leitfähigkeit zu erhöhen. Ausserdem ermöglicht ein Litzenleiter auch eine bessere Flexibilität. In einadrigen Mittelspannungskabeln gibt es einen einzelnen Leiter, während mehradrige Kabel mehrere Leiter enthalten, die entweder parallel verwendet werden, um die Stromtragfähigkeit zu erhöhen, oder für unterschiedliche Phasen in einem dreiphasigen Stromsystem genutzt werden. In der gezeigten Ausführungsform weist das erfindungsgemässe Kabel einen Leiter auf, es handelt sich also um ein einadriges Kabel.

Das Isolationssystem 35 kann aus mehreren Schichten bestehen, die den Leiter elektrisch isolieren und gleichzeitig mechanischen Schutz bieten und ist vorzugsweise zylindrisch ausgebildet. Direkt auf dem Leiter befindet sich in der Regel eine innere Halbleiterschicht, die für eine gleichmässige elektrische Feldverteilung sorgt. Darauf folgt ein Dielektrikum, was die Hauptisolierung darstellt. Dieses besteht häufig aus Polymerzusammensetzungen, die auf vernetztem Polyethylen (XLPE) oder einem Ethylen-Propylen-Kautschuk (EPR) basieren. Eine äussere Halbleiterschicht kann das Dielektrikum umgeben und dient ebenfalls zur gleichmässigen Verteilung des elektrischen Feldes.

Die metallische Abschirmung 40 kann ebenfalls aus mehreren Komponenten bestehen. Vorzugsweise liegt ein Quellband für die Längswasserdichtigkeit direkt auf der äusseren Halbleiterschicht auf. Dieses Band quillt bei Kontakt mit Feuchtigkeit auf und verhindert so, dass sich allfällig eingedrungenes Wasser ungehindert in axialer Richtung im Kabel ausbreiten kann. Das Quellband ist vorzugsweise etwa 0.4 bis 0.6 mm dick. Geeignete Quellbänder sind der Fachperson bekannt. Darüber kann die metallische Abschirmung 40 eine geeignete Anzahl Schirmdrähte aufweisen, die vorzugsweise aus Kupfer oder Aluminium oder einer Aluminiumlegierung bestehen und um das Quellband angeordnet sind. Diese Schirmdrähte dienen zur Ableitung von kapazitiven und induzierten Ladeströmen sowie Fehlerströmen und bieten Schutz vor elektromagnetischen Störungen. Um die Schirmdrähte zu fixieren und mechanisch zu stabilisieren sowie eine gleichmässige Stromverteilung zu gewährleisten, kann ein Metallband verwendet werden, das die Schirmdrähte sicher an ihrem Platz hält.

Der Aussenmantel 20 weist wenigstens zwei Schichten auf. Die erste Schicht des Aussenmantels 45 liegt in der vorliegenden Ausführungsform direkt auf der metallischen Abschirmung 40 auf und enthält ein erstes Polymerbasismaterial ausgewählt aus der Gruppe bestehend aus PE-LLD (lineares niedrigdichtes Polyethylen), PE-LD (niederdichtes Polyethylen) oder einer Mischung dieser Materialien, und wenigstens 15 Gew.% eines Füllstoffs mit einer Dichte von 2.3 bis 3.0 g/cm³, vorzugsweise 2.5 bis 3.0 g/cm³.

Die zweite Schicht des Aussenmantels 50 ist in einem grösseren radialen Abstand zum Kabelkern angeordnet als die erste Schicht und umgibt vorzugsweise die erste Schicht des Aussenmantels 45. Die zweite Schicht enthält ein zweites Polymerbasismaterial, das wenigstens 90 Gew.% PE-HD (hochdichtes Polyethylen) enthält. Diese Schicht bietet zusätzlichen mechanischen Schutz und ist widerstandsfähig gegenüber Umwelteinflüssen.

Das erfindungsgemässe Mittelspannungskabel wird vorzugsweise mittels Coextrusion hergestellt. Dabei wird der Kabelkern zunächst standardgemäss vorbereitet. Der Coextrusionsprozess umfasst das simultane Extrudieren von mehreren Polymerbasismaterialien durch eine Mehrschicht-Ummantelungskopf, um die verschiedenen Schichten des Aussenmantels in einem einzigen Arbeitsgang aufzubringen. Die erste Schicht des Aussenmantels wird hierbei aus einem ersten Polymerbasismaterial hergestellt, das aus der Gruppe bestehend aus linearem niedrigdichtem Polyethylen (PE-LLD) und niedrigdichtem Polyethylen (PE-LDPE) oder einer Mischung davon ausgewählt wird. Dieser Schicht wird eine beträchtliche Menge von wenigstens 15 Gewichtsprozent eines Füllstoffs zugesetzt, der eine Dichte von 2,5 bis 3.0 g/cm³ hat. Im selben Prozess wird die zweite Schicht des Aussenmantels aufgebracht, die aus einem zweiten Polymerbasismaterial besteht, das mindestens 90 Gewichtsprozent hochdichtes Polyethylen (PE-HD) enthält.

Beide Schichten werden vorzugsweise durch eigene Extruder gefördert, die die Polymerbasismaterialien aufschmelzen und in den Mehrschicht-Ummantelungskopf einspeisen. Hier werden sie so verteilt, dass sie als sich unmittelbar anschliessende, feste Schichten den Kabelkern umhüllen. Entsprechende Verfahrensparameter sind der Fachperson bekannt.

Im Anschluss an die Coextrusion wird das Kabel typischerweise durch Abkühlung stabilisiert und auf eine Spule oder eine Trommel aufgewickelt.

### Beispiele

### Beispiel 1: Beurteilung des Abmantelns

Das erfindungsgemässe Mittelspannungskabel wurde vorzugsweise mittels Coextrusion hergestellt. Die erste Schicht des Aussenmantels wurde aus PE-LLD hergestellt. Dieser Schicht wurden 40 Gewichtsprozent Kreide zugesetzt. Im selben Prozess wurde die zweite Schicht des Aussenmantels aufgebracht, die aus PE-HD bestand.

Beide Schichten wurden durch eigene Extruder gefördert, die das Material aufschmolzen und in den Zweischicht-Ummantelungskopf einspeisten. Hier wurden sie so verteilt, dass sie als unmittelbar anschliessende, feste Schichten den Kabelkern umhüllten. Entsprechende Verfahrensparameter sind der Fachperson bekannt

Bei der Beurteilung des Abmantelns wurden folgende Punkte berücksichtigt:
- Brechverhalten
- Unerwünschtes Weiterreissen entlang des Metallbandes
- Verletzungsgefahr der Schirmung
- Kraftaufwand

Die Bewertung wurde auf einer Skala von 1 bis 4 durchgeführt, wobei 1 für «schlecht» und 4 für «gut» steht:

| | | 10/12 kV Mittelspannungskabel mit Kupferleiter und Kupferdrahtschirm | | | | | 10/12 kV Mittelspannungskabel mit Aluminiumleiter und Aluminiumbandschirm | |
|---|---|---|---|---|---|---|---|---|
| Querschnitt | | 95 mm2 | | | 240 mm2 | | 240 mm2 | |
| 2-Schicht-Mantel | | X | | | X | | X | |
| 1-Schicht-Mantel | | | X | X | | X | | X |
| Beurteilung der Abmantelbarkeit | | 2.9 | 2.0 | 2.1 | 3.8 | 3.0 | 4.0 | 3.5 |
| Abisolierzange mit max. Schnitttiefe von | | 1.5 mm | | | 2 mm | | 2 mm | |
| Biegekraft in Anlehnung an HD605 S2 | [N] | 453 | 513 | 450 | 1038 | 1268 | 830 | 907 |
| | Red [%] | - 12 | 0 | - 12 | - 18 | 0 | - 8 | 0 |

| Konstruktion | | 10/12 kV Mittelspannungskabel mit Kupferleiter und Kupferdrahtschirm | | | | | 10/12 kV Mittelspannungs kabel mit Aluminiumleiter und Aluminiumband schirm | |
|---|---|---|---|---|---|---|---|---|
| Querschnitt | | 95 mm2 | | | 240 mm2 | | 240 mm2 | |
| 2-Schicht-Mantel | | X | | | X | | X | |
| 1-Schicht-Mantel | | | X | X | | X | | X |
| Variante | | V1 | Ref | Wettbewerb | V3 | Ref | V4 | Ref |
| Beurteilung Abmantelbarkeit | | 2.9 | 2.0 | 2.1 | 3.8 | 3.0 | 4.0 | 3.5 |
| Abisolierzange mit max. Schnittiefe von | | 1.5 mm | | | 2 mm | | 2 mm | |
| Biegekraft in Anlehnung an HD605 S2 | [N] | 453 | 513 | 450 | 1038 | 1268 | 830 | 907 |
| | Red. [%] | - 12 | 0 | - 12 | - 18 | 0 | - 8 | 0 |

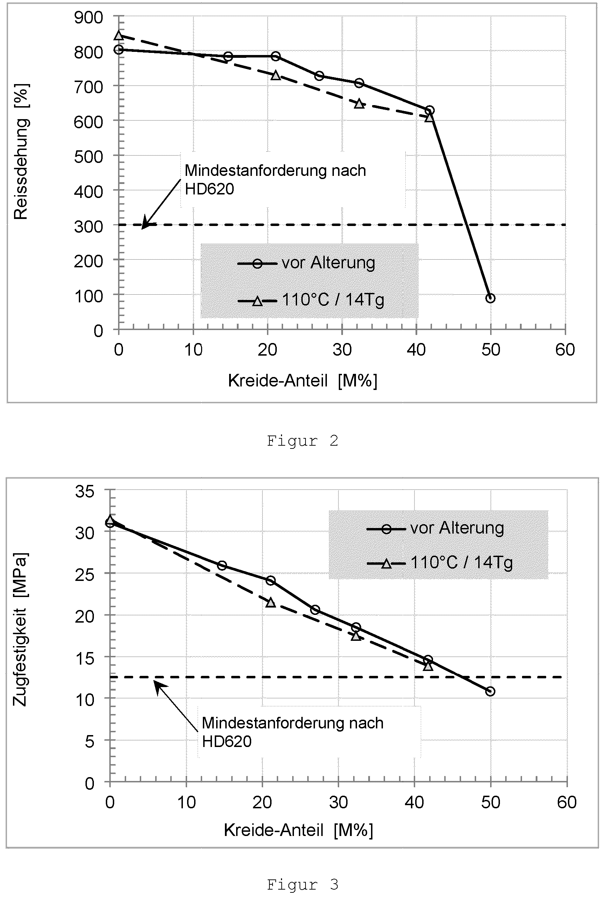

### Fig 2: Beurteilung der Reissdehnung

Die Reissdehnung des erfindungsgemässen Kabelmantels wurde gemäss IEC 60811-501 ermittelt. Dabei wird zuerst die Ausgangslänge der Probe ermittelt. Dann wird die Probe gezogen und die Längenänderung aufgezeichnet. Sobald die Probe bricht, wird die maximale Längenänderung ermittelt und in Relation zur Ausgangslänge gesetzt, um die Reissdehnung zu berechnen. Eine Reissdehnung von 300% bedeutet, dass die Probe auf das Vierfache ihrer ursprünglichen Länge gedehnt wurde, bevor sie riss.

Figur 2 zeigt die Reissdehnung der Kabelmantelschicht 1 des erfindungsgemässen Mittelspannungskabels vor und nach 14 Tagen Alterung bei 110°C auf der y-Achse und den Massenanteil der Kreide auf der x-Achse. Die Mindestanforderung beträgt 300%. Die Ergebnisse zeigen, dass die Reissdehnung vor und nach der Alterung bis zu einem Gewichtsanteil von 40% der Kreide durchgehend über der geforderten Mindestanforderung liegt.

### Fig 3: Beurteilung der Zugfestigkeit

Die Zugfestigkeit des erfindungsgemässen Kabels wurde gemäss IEC 60811-501 ermittelt. Die Messung der Zugfestigkeit erfolgt durch einen standardisierten Zugversuch. Hierbei wird eine genormte Probe des Kabelmaterials in einer Zugprüfmaschine eingespannt. Die Maschine zieht die Probe mit einer konstanten Geschwindigkeit auseinander, bis sie bricht.

Figur 3 zeigt die Zugfestigkeit der Kabelmantelschicht 1 des erfindungsgemässen Mittelspannungskabels sowohl vor der Alterung als auch nach 14 Tagen bei 110°C. Die Mindestanforderung beträgt 12,5 MPa. Die Ergebnisse zeigen, dass die Zugfestigkeit vor und nach der Alterung bis zu einem Gewichtsanteil von 40% Kreide durchgehend über der geforderten Mindestanforderung liegt, was die ausgezeichnete Leistungsfähigkeit des erfindungsgemässen Kabels unter Alterungsbedingungen unterstreicht.

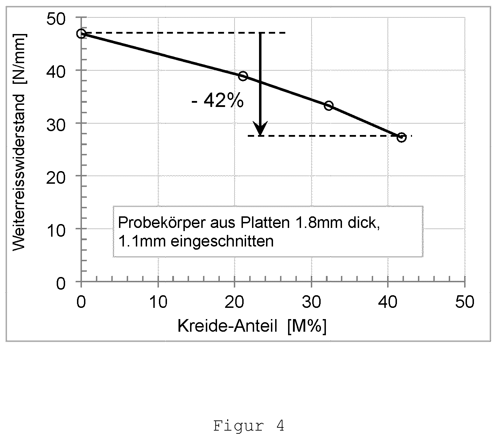

### Fig 4: Weiterreisswiderstand

Der Weiterreisswiderstand des erfindungsgemässen Kabels wurde in Anlehnung an EN 50396 ermittelt. Zusätzlich zum Schlitz wurde in der Fortsetzung dieses Schlitzes noch ein ca. 1.1 mm tiefer Schnitt angebracht, der als Sollbruchstelle dient und dem axialen Anschneiden des Mantels beim Abmanteln entspricht. Beim Test wird eine Probe des Kabelmaterials mit einem vorgeschnittenen Schlitz in einer Zugprüfmaschine eingespannt. Die Maschine zieht die Probe mit einer konstanten Geschwindigkeit, während die aufgebrachte Kraft kontinuierlich gemessen wird, bis die Probe vollständig reisst. Die maximale Kraft, die zum Weiterreissen erforderlich ist, wird als Weiterreisswiderstand angegeben.

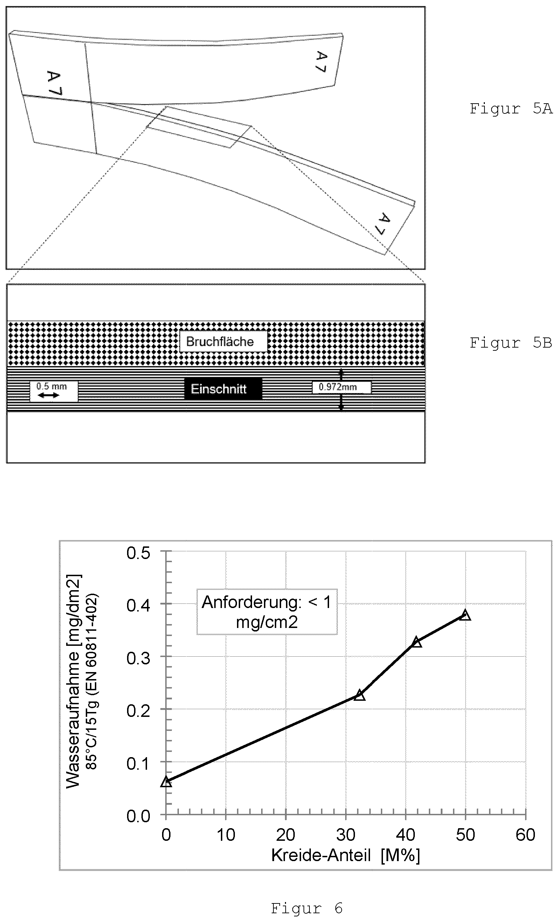

Figur 4 zeigt den Weiterreisswiderstand der Kabelmantelschicht 1 in Abhängigkeit vom Gewichtsanteil der enthaltenen Kreide. Die erste Schicht des Aussenmantels, bestehend aus dem Polymerbasismaterial PE-LLD und Kreide, führt im beanspruchten Bereich zu einer signifikanten Reduktion der Weiterreissfestigkeit. Dies ermöglicht eine einfachere Abtrennung des Aussenmantels, ohne tiefes Einschneiden des Kabelmantels. Dadurch wird das Risiko wesentlich reduziert das Innere des Kabels zu beschädigen. Das bessere Bruchverhalten der ersten Schicht des Aussenmantels begünstigt die Reduktion der Weiterreissfestigkeit. Voraussetzung dafür ist auch eine angepasste axiale Schnitttiefe. Die von den Normen geforderten mechanischen Anforderungen werden dabei eingehalten. (siehe auch Figuren 5A und 5B).

### Fig 6: Wasseraufnahme

Die Wasseraufnahme des erfindungsgemässen Kabels wurde gemäss EN 60811-402 ermittelt. Eine genormte Probe des Kabelmaterials wurde bei 85°C für 15 Tage in Wasser eingetaucht. Nach der Einwirkzeit wurde die Probe entnommen, getrocknet und erneut gewogen. Der Unterschied in der Masse vor und nach der Wasseraufnahme gibt die Menge des absorbierten Wassers an, die als Gewichtszunahme bezogen auf die Oberfläche des Probekörpers in mg/cm² angegeben wird.

Figur 6 zeigt die Wasseraufnahme der Kabelmantelschicht 1 in Abhängigkeit vom Gewichtsanteil der enthaltenen Kreide. Die Daten verdeutlichen, dass die Wasseraufnahme im beanspruchten Konzentrationsbereich der Kreide durchgehend unterhalb der geforderten Menge von weniger als 1 mg/cm² liegt. Diese ausgezeichneten Ergebnisse unterstreichen die Eignung des Kabels für den Einsatz in feuchten Umgebungen.

## Patentansprüche

1. Niederspannungs- oder Mittelspannungskabel, vorzugsweise Mittelspannungskabel, umfassend einen Kabelkern und einen diesen radial umgebenden Aussenmantel, wobei der Kabelkern wenigstens einen Leiter, ein diesen umgebendes Isolationssystem und gegebenenfalls eine das Isolationssystem umgebende metallische Abschirmung enthält, **dadurch gekennzeichnet, dass**
der Aussenmantel wenigstens eine erste Schicht und eine zweite Schicht aufweist, wobei die zweite Schicht in einem grösseren radialen Abstand zum Kabelkern angeordnet ist als die erste Schicht, wobei
die erste Schicht des Aussenmantels ein erstes Polymerbasismaterial ausgewählt aus der Gruppe bestehend aus PE-LLD (lineares niedrigdichtes Polyethylen), MDPE (mitteldichtes Polyethylen) und PE-LD (niederdichtes Polyethylen) oder einer Mischung davon und wenigstens 15 Gew.% eines Füllstoffs mit einer Dichte von 2.3 bis 3.0 g/cm³, vorzugsweise 2.5 bis 3.0 g/cm³ enthält und
die zweite Schicht des Aussenmantels ein zweites Polymerbasismaterial enthaltend wenigstens 90 Gew.% PE-HD (hochdichtes Polyethylen) enthält, wobei diese zweite Schicht eine Dicke von 20% bis 50% der gesamten Dicke des Aussenmantels aufweist.

2. Niederspannungs- oder Mittelspannungskabel gemäss Anspruch 1, **dadurch gekennzeichnet, dass** das erste Polymerbasismaterial wenigstens 50% PE-LLD enthält oder aus PE-LLD besteht.

3. Niederspannungs- oder Mittelspannungskabel gemäss einem der vorangehenden Ansprüche, **dadurch gekennzeichnet, dass** die erste Schicht des Aussenmantels 15 bis 50 Gew.% des Füllmaterials, 40 bis 85 Gew.% des Polymerbasismaterials und 0 bis 10% weitere Inhaltsstoffe enthält.

4. Niederspannungs- oder Mittelspannungskabel gemäss einem der vorangehenden Ansprüche, **dadurch gekennzeichnet, dass** der Füllstoff ausgewählt ist aus der Gruppe bestehend aus Kreide, Talk, Aluminiumtrihydroxid, Magnesiumhydroxid und Kaolin oder Mischungen davon, vorzugsweise Kreide.

5. Niederspannungs- oder Mittelspannungskabel gemäss Anspruch 4, **dadurch gekennzeichnet, dass** die erste Schicht des Aussenmantels 30 bis 45 Gew.% Kreide enthält.

6. Niederspannungs- oder Mittelspannungskabel gemäss einem der vorangehenden Ansprüche, **dadurch gekennzeichnet, dass** das zweite Polymerbasismaterial aus PE-HD besteht.

7. Niederspannungs- oder Mittelspannungskabel gemäss einem der vorangehenden Ansprüche, **dadurch gekennzeichnet, dass** die metallische Abschirmung Aluminium enthält.

8. Niederspannungs- oder Mittelspannungskabel gemäss einem der Ansprüche 1 bis 6, **dadurch gekennzeichnet, dass** die metallische Abschirmung Kupfer enthält.

9. Niederspannungs- oder Mittelspannungskabel gemäss einem der vorangehenden Ansprüche, **dadurch gekennzeichnet, dass** die zweite Schicht ein Additiv als UV-Schutz enthält.

10. Mittelspannungskabel gemäss einem der vorangehenden Ansprüche.
